(19) **Europäisches Patentamt / European Patent Office / Office européen des brevets**

(11) **EP 1 418 323 B1**

(12) **EUROPEAN PATENT SPECIFICATION**

(45) Date of publication and mention
of the grant of the patent:
**15.07.2009 Bulletin 2009/29**

(51) Int Cl.:
*F02D 37/02* (2006.01)   *F02D 13/02* (2006.01)
*F02D 41/34* (2006.01)   *F02D 41/36* (2006.01)
*F02D 13/06* (2006.01)   *F02P 9/00* (2006.01)

(21) Application number: **02025182.3**

(22) Date of filing: **11.11.2002**

(54) **A method in an internal combustion engine**

Ein Verfahren in einem Verbrennungsmotor

Un procédé dans un moteur à combustion interne

(84) Designated Contracting States:
**DE GB SE**

(43) Date of publication of application:
**12.05.2004 Bulletin 2004/20**

(73) Proprietor: **Ford Global Technologies, LLC**
**Dearborn, MI 48126 (US)**

(72) Inventor: **Otterspeer, Rob**
**419 08 Göteborg (SE)**

(74) Representative: **Börlin, Maria et al**
**Albihns AB**
**P.O. Box 5581**
**114 85 Stockholm (SE)**

(56) References cited:
**DE-A1- 19 859 018         US-A- 4 509 488**
**US-A1- 2002 083 904      US-B1- 6 371 079**

• **PATENT ABSTRACTS OF JAPAN vol. 014, no. 237 (M-0976), 21 May 1990 (1990-05-21) & JP 02 062443 A (HINO MOTORS LTD), 2 March 1990 (1990-03-02)**

## Description

TECHNICAL FIELD

The present invention relates to a method in an internal combustion engine, comprising individually controllable valves. The invention also relates to an internal combustion engine system comprising an internal combustion engine and a control device, the engine comprising a number of cylinders, air and fuel input means for each cylinder, and a crankshaft including a number of crankshaft journals, the air and fuel input means being adapted to receive for their activation control signals from the control device.

BACKGROUND

Fuel consumption of internal combustion engines is something that receives a lot of attention in the vehicle industry. A number of methods are known reduce fuel consumption. Fuel consumption can be reduced even further by the use of multi stroke operation, i.e. adapting the stroke mode of the engine to speed and load requirements at hand (i.e. EP 1136678). However, in general, the higher stroke modes show deterioration in the NVH (Noise Vibration and Harshness) behavior of the engine. In turn, this restricts the operation area for the specific modes to smaller areas of the speed and load operation span, depending on the manufacturers' threshold values for customer acceptance. However, next to four stroke, six stroke mode is the stroke mode with the largest area of applicability.

Engines with an odd number of cylinders, having one, three, five, seven or more cylinders, are advantageous in that they by nature can achieve four, six and eight stroke modes, all with equal crankshaft rotation angular distances between the ignitions of the engine. However, engines with an even number of cylinder can not be run in four stroke mode, and alternatively in six stroke mode, achieving equal crankshaft rotation angular distances between the ignitions of the engine in both stroke modes.

SUMMARY OF THE INVENTION

An object of the invention is to reduce fuel consumption of internal combustion engines with an even number of cylinders.

Another object of the invention is to allow in a vehicle an engine with an even number of cylinders to operate in different stroke modes, without compromising comfort for driver and passengers of the vehicle.

Another object of the invention is to allow in a vehicle an engine with an even number of cylinders to operate in different stroke modes, without compromising the drivability of the vehicle.

These objects are reached through a method and an internal combustion engine system of the type initially mentioned, whereby a combustion load at a first ignition is adjusted at least partly on the basis of at least one interval between two ignitions of the engine.

Thereby, combustion loads can be adapted to compensate unequal engine ignition intervals, so that where intervals are large, combustion loads are large, and vice versa. This will provide a more continuous output torque of the engine, which in turn supports comfort to drivers and passengers in a vehicle in which the engine is operating. A continuous output torque will also support the drivability of such a vehicle.

By the method it is possible to provide an engine with an even number of cylinders, which in a situation with a relatively low external load can change from a four stroke operation to a six stroke operation. The latter will decrease the frequency of the ignitions, while increasing combustion loads, to achieve more efficient combustion processes in the engine, while maintaining the output torque. This, in turn, reduces the fuel consumption.

Preferably, the method step of adjusting a combustion load comprises adjusting the combustion load at the first ignition at least partly on the basis of the angular distance of the crankshaft rotation between the first ignition and an immediately preceding ignition of the engine, and/or the angular distance of the crankshaft rotation between the first ignition and an immediately subsequent ignition of the engine. The result hereof is that the combustion load and the ignition interval(s) on which the determination of the load is based occur within the same region of time, which means that deviations in the ignition intervals can be effectively compensated by suitable combustion loads.

Preferably, the angular distances of the crankshaft rotation between consecutive ignitions of the engine in a time region around the first ignition are unequal and are based on positions of crankshaft journals of a crankshaft of the engine. Thus, a crankshaft can be provided that have journal positions that are optimized for other requirements than equal engine ignition intervals in a certain stroke mode, e.g. optimized for minimal ignition intervals in two or more stroke modes. Thereby, a suitable crankshaft design and a suitable control of the combustion loads can be used to obtain an engine which gives a good operational performance in two or mode stroke modes.

DESCRIPTION OF FIGURES

Below, the invention will be described in detail with the aid of the drawings, in which

- fig. 1 shows schematically a cross-sectional view of an arrangement at a cylinder of an internal combustion engine, the cross-section being oriented in the longitudinal direction of the cylinder,
- fig. 2-4 show diagrams indicating ignitions in each cylinder of a six cylinder engine as a function of the crankshaft angle, at different stroke modes,

- fig. 5 shows a diagram indicating ignitions in the six cylinder engine as a function of the crankshaft angle, at different stroke modes,
- fig. 6 shows a diagram depicting the angular locations of the crankshaft journals of a crankshaft of an inline six cylinder engine,
- figures 7-9 show diagrams depicting ignitions at a four, six and eight stroke mode operation, respectively, of the engine with the crankshaft with journals indicated in fig. 6,
- fig. 10 shows a diagram with combustion load factors for ignitions of the operation modes of fig. 7-9,
- fig. 11 shows a diagram depicting the angular locations of the crankshaft journals of a crankshaft of an inline six cylinder engine,
- figures 12-14 show diagrams depicting ignitions at a four, six and eight stroke mode operation, respectively, of the engine with the crankshaft with journals indicated in fig. 11,
- fig. 15 shows a diagram depicting the angular locations of the crankshaft journals of a crankshaft of a V-type six cylinder engine,
- figures 16-18 show diagrams depicting ignitions at a four, six and eight stroke mode operation, respectively, of the engine with the crankshaft with journals indicated in fig. 15, and
- fig. 19 shows a diagram with combustion load factors for ignitions of the operation modes of fig. 16-18.

## DETAILED DESCRIPTION OF PREFERRED EMBODIMENTS

For this presentation, the expression "stroke cycle" refers to the working cycle in each cylinder of a engine. For example, a four stroke cycle includes the strokes compression (ignition), expansion, expulsion and induction. The expression "stroke mode" refers to the operational mode of the engine regarding the stroke cycle in which the cylinders work. For example, if the cylinders work in a four stroke cycle, then the engine is in four stroke mode. The expression "engine ignition interval" refers to the interval between two consecutive ignitions in the engine. In normal operation, these consecutive ignitions each occur in different cylinders of the engine.

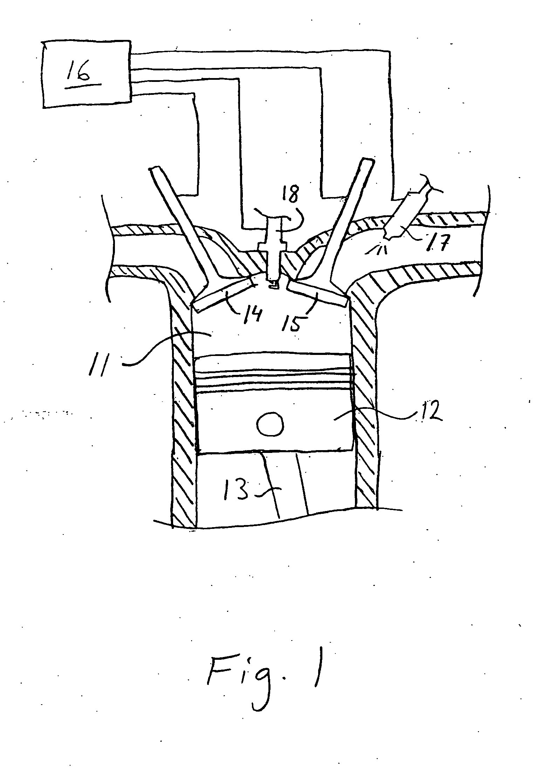

Fig. 1 shows schematically an arrangement at a cylinder 11 of an inline six cylinder internal combustion engine.

A piston 12 is connected to a crankshaft (not shown) via a piston rod 13. At each cylinder a two, three, four, five or more valves are provided. In fig 1 only two valves 14, 15 are shown, an exhaust valve 14 and an intake valve 15. The movement of each valve can be controlled individually by a control device 16. Activation of the valves can be done with hydraulic, pneumatic, electromagnetic, piezoelectric or any other known activation aid.

Thus, the valves can be moved independently of the crankshaft. As explained further below, the engine can be run in different stroke modes, and the possibility to control the valves independently of the crankshaft is advantageous for facilitating different stroke modes of the engine. However, certain types of stroke modes, e.g. four and eight stroke mode, can be achieved with traditionally camshaft activated valves. In the latter case well known cylinder deactivation techniques are being used.

Air and fuel input means comprising a fuel injector 17 are provided for each cylinder and controllable by the control device 16. By controlling the fuel input means the combustion load at each ignition can be controlled. A combustion load is a load resulting from a combustion at an ignition in the engine. The value of the combustion load can be determined with any known method. For example, it can be determined as an integral of the pressure over the change of volume in the cylinder ($\int P\text{-}dV$), known as IMEP (Indicated Mean Effective Pressure), or as the net chemical energy released due to the combustion.

The fuel injector 17 can be located in the intake part at the cylinder, as depicted in fig. 1, or in the combustion chamber of the cylinder. The intake valve 15 could be part of the air and fuel input means and used to control the amount of gas inducted. Alternatively, the air and fuel input means could comprise a butterfly valve in the intake to the cylinder. Thereby, throttling can be performed with the butterfly valve, or with a combined use of the butterfly valve and the intake valve 15.

Fig. 1 also depicts igniting means 18 in each cylinder, comprising a spark plug. However, the invention is also applicable to a compression ignition engine operation.

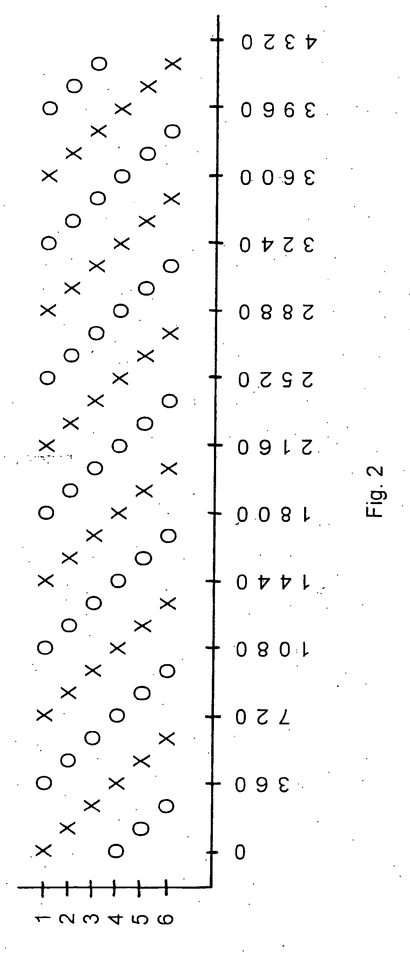

The diagram in fig. 2 indicates, with the letter X, ignitions in each cylinder, 1-6, of the six cylinder engine as a function of the crankshaft angle, at a four stroke mode of the engine. The cylinders are numbered according to their relative spatial position. The letter "O" indicates a position in each cylinder of the respective piston near the Top Dead Center (TDC), at which no ignition takes place, in a four stroke cycle typically at a transition from the expulsion to the induction stroke. It can be seen that the ignition sequence is 123456. However, other sequences are possible.

In the four stroke mode, the crankshaft rotates two turns, or 720°, between two consecutive ignitions in the same cylinder. This means that the crankshaft rotation is 720°/6=120° between each ignition of the engine. In order for the inline six cylinder engine to be adapted to a four stroke mode, the crankshaft is arranged so that there is 120 degrees of angular distance between the positions of the crankshaft journals, i.e. the junctions between the crankshaft and the connecting rods.

In order to run in a six stroke mode, three turns, or 1080°, of crankshaft rotation should be completed between two consecutive ignitions in the same cylinder. This means that for a six stroke mode, the crankshaft rotation should be 1080°/6=180° between each ignition of the engine. Thus, in order for the inline six cylinder engine to be adapted to a six stroke mode, the crankshaft should be arranged so that there is 180 degrees of angular distance between the positions of the junctions between the crankshaft and the connecting rods.

Thus, since the design of the crankshaft has to be fixed, in a six cylinder engine adapted to a four stroke mode it is not possible to achieve a six stroke mode. This is the case in all engines with an even number of cylinders, regardless if the cylinders are arranged in an inline or a "V" manner. However, the angular distances between the positions of the junctions between the crankshaft and the connecting rods are different in a "V" type engine than in an inline engine.

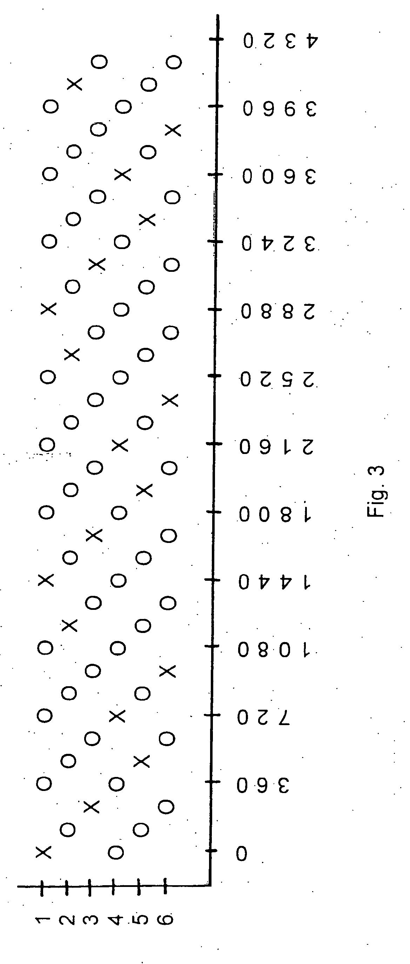

Nevertheless, in an engine with an even number of cylinders, an eight stroke mode can be achieved. Fig. 3 shows a diagram corresponding to the one in fig. 2, and illustrating an eight stroke mode in the engine. Here, four turns of the crankshaft are completed, i.e. 1440°, during a stroke cycle, so that the ignition interval of the engine is 1440°/6=240°.

If a relative small amount of fuel is injected in each cylinder at each cycle, the efficiency will be low, among other things due to a low combustion temperature. For this reason, in some engine operating situations, the requested output torque is such that, when run in a four stroke mode, the combustion load is too low at each ignition for the efficiency to reach a desired level.

A way to improve the efficiency in these situations would be to allow more crankshaft rotation between each ignition and increasing the combustion load at each ignition, achieving the same output torque, but with more efficiency. In other word, the engine could be run in a higher stroke mode.

As mentioned, an eight stroke mode is achievable in a six cylinder engine adapted to four stroke mode, but the operational situation could be that increased combustion loads can not compensate for the longer ignition intervals, and the requested output torque can not be achieved. In such a case a six stroke mode would be desirable.

The fuel input means 17 of each cylinder can be controlled so that in the respective cylinder one or more consecutive four stroke cycles are followed by one or more consecutive eight stroke cycles. Further, a sequence of altering groups of four stroke cycles and groups of eight stroke cycles can be achieved, whereby each group consists of at least one cycle.

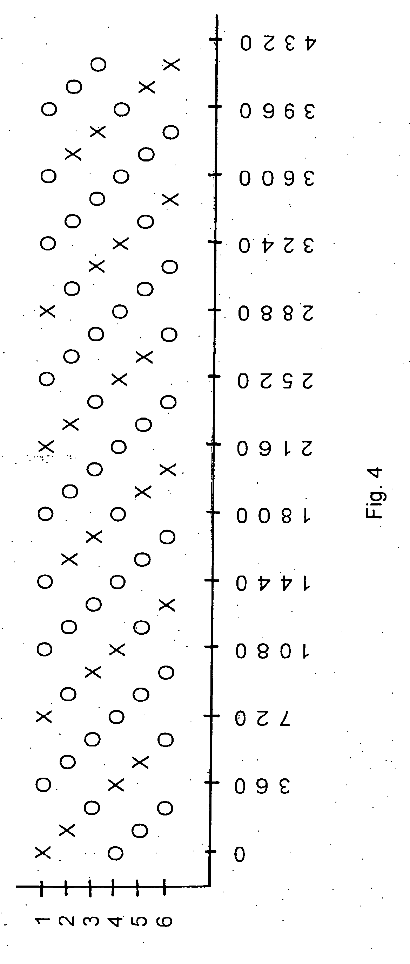

Fig. 4 illustrates an example of an operation with such an altering of cycles. In each cylinder, one four stroke cycle is altered with one eight stroke cycle. Here, this type of stroke mode is referred to as altering four and eight stroke mode.

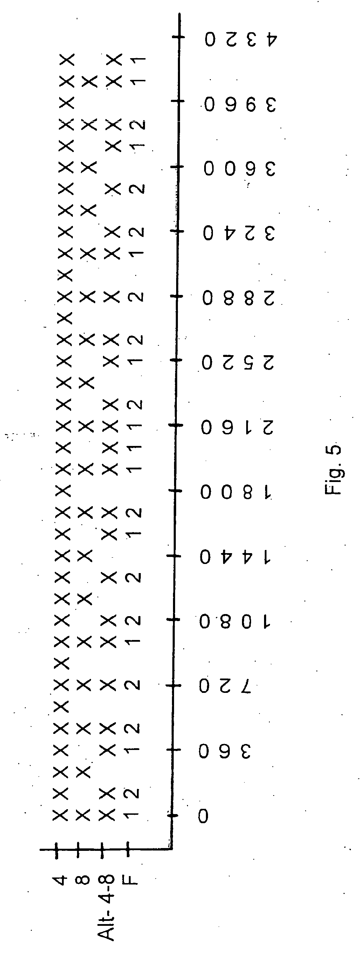

Fig. 5 shows a diagram with each ignition of the engine, marked with an "X", as a function of the crankshaft angle, at four, eight and altering four and eight stroke modes, indicated "4", "8", and "Alt-4-8", respectively. It can be seen that at a four stroke mode, 36 ignitions occurs in 4320 degrees of crankshaft rotation. At the altering four and eight stroke mode, 24 ignitions occurs in the same angular interval. This means a mean value of 180° of crankshaft rotation per ignition, which corresponds to a six stroke mode.

It can be seen in fig. 5 that in the altering four and eight stroke mode the engine ignition intervals are unequal. This can result in a jerky behavior of the engine, and a propulsion of a vehicle, in which the engine is operating, being uncomfortable to a driver and passengers, as well as detrimental to the drivability of the vehicle.

To solve this problem, a combustion load at a first ignition, which could be any ignition during operation, is adjusted at least partly on the basis of the angular distance of the crankshaft rotation between the first ignition and an immediately subsequent ignition of the engine.

Alternatively, the combustion load at the first ignition is adjusted at least partly on the basis of the angular distance of the crankshaft rotation between the first ignition and an immediately preceding ignition of the engine.

As a further alternative the combustion load at the first ignition is adjusted at least partly on the basis of the angular distances of the crankshaft rotation between the first ignition and an immediately preceding ignition of the engine, and an immediately subsequent ignition as well.

By the invention, the effects of the unequal ignition intervals can be compensated for by controlling the combustion loads at each ignition, so that an essentially continuous torque is achieved, and the advantages of the six stroke mode obtained.

In the diagram in fig. 5, "F" denotes a combustion load factor according to one alternative of the invention. It should be noted that the load factor in fig. 5 is a mathematical value not taking into consideration calibration adjustments, that could be required in a practical utilization of the invention. It can be seen that where an ignition is followed by 120° of crankshaft rotation until an immediately following ignition, F equals 1. Where an ignition is followed by 240° of crankshaft rotation until an immediately following ignition, F equals 2.

Above, obtaining a stroke mode comparable to six stroke mode has been described. However, the method described above is also applicable to situations where higher stroke modes are desired. As an example, using the invention, a stroke mode comparable to a "pure" twelve stroke mode can be achieved by creating an altering eight and sixteen stroke mode, in a similar manner as achieving a altering four and eight stroke mode.

In general, it is possible to obtain a "combined" stroke mode, to achieve the advantages of a stroke mode "between" the two modes that take part in the combination. Above it is shown how it is possible to combine, in an engine with an even number of cylinders, four and eight stroke modes, to obtain an "artificial" six stroke mode.

An engine with an even number of cylinders can be adapted, as in the example above, to a four stroke mode with equal ignition intervals. In an engine with an odd number of cylinders, four, six stroke and other stroke modes are all possible with equal distances between ignitions, as described in the patent application _____, filed by the applicant, having the same priority date as the present application, and included herein by reference. An engine with an even number of cylinders can alternatively to what has been described above be adapted, be adapted to a six stroke mode with equal ignition intervals. To make this possible in an inline six cylinder engine, the crankshaft has to be designed so that there is 180 degrees of angular distance between the positions of the crankshaft journals, i.e. the junctions between the crankshaft and the connecting rods. However, a six cylinder inline engine with 180 degrees of angular distance between the positions of the crankshaft journals cannot be operated in a four stroke mode. In fact, it is not possible to obtain more frequent ignitions compared to the six stroke mode, without accepting simultaneous ignitions in separate cylinders, or unequal amounts of ignitions in different cylinders over time.

Alternatively to what has been described above, an engine with an even number of cylinders can be adapted to be operated in two "neighboring" stroke modes, at which both modes present unequal distances between the ignitions. Thereby, deviations in each mode from the optimal equal ignition interval operation are results of considerations concerning the predicted use of the engine. For example, where the engine is used to drive a vehicle, a predicted high load operation of the engine could result in the desire to obtain a four stroke operation with more level ignition intervals, than in the six stroke case. Where the vehicle is predicted to be used so that the engine operates mostly in low load situations, it can be desirable to create more level ignition intervals in the six stroke mode, at the cost of obtaining more unequal ignition intervals in the four stroke mode.

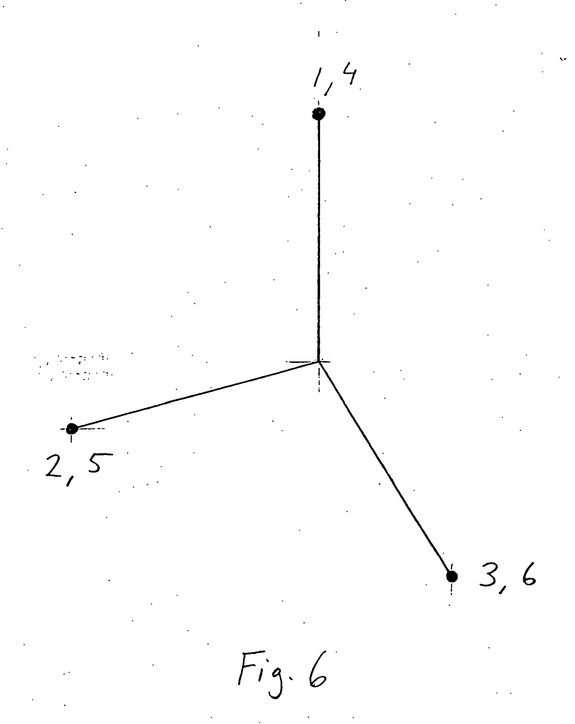

Fig. 6 shows a diagram depicting the angular locations of the crankshaft journals of a crankshaft of an inline six cylinder engine. The diagram indicates the positions of journals of each cylinder, numbered 1 to 6. In this example the angular distance between the journals of cylinders 1 and 4 and the journals of cylinders 2 and 5 is approximately 105,4 degrees. The same angular distance is presented between the journals of cylinders 2 and 5 and the journals of cylinders 3 and 6. The angular distance between the journals of cylinders 3 and 6 and the journals of cylinders 1 and 4 is approximately 149,2 degrees.

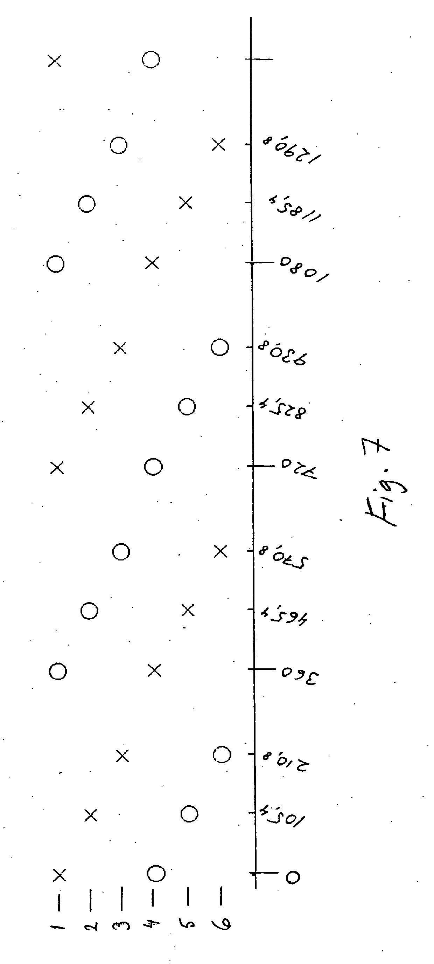

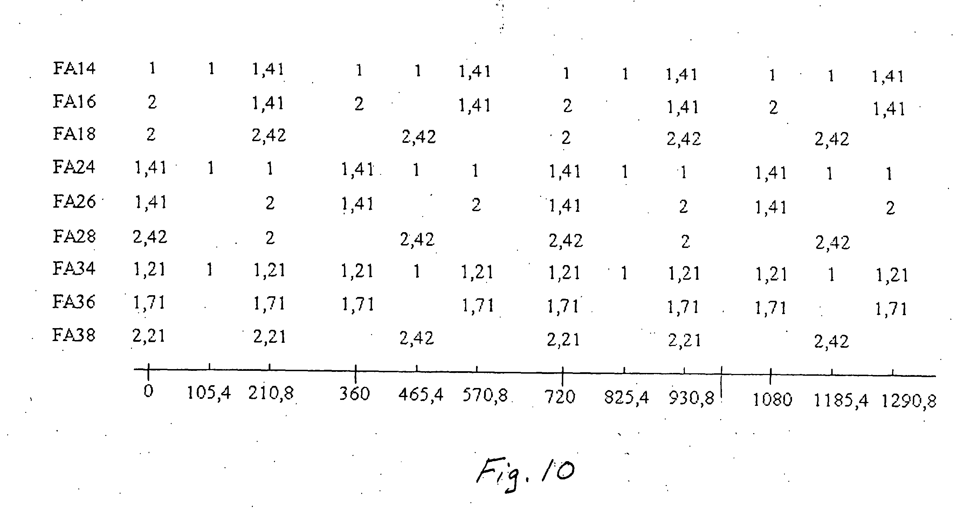

Figures 7-9 show diagrams depicting ignitions (marked X) and TDC positions with no ignitions (marked O) at a four stroke mode operation of the engine with the crankshaft with journals indicated in fig. 6. Fig. 10 shows a diagram with combustion load factors for ignitions of the operation modes of fig. 7-9.

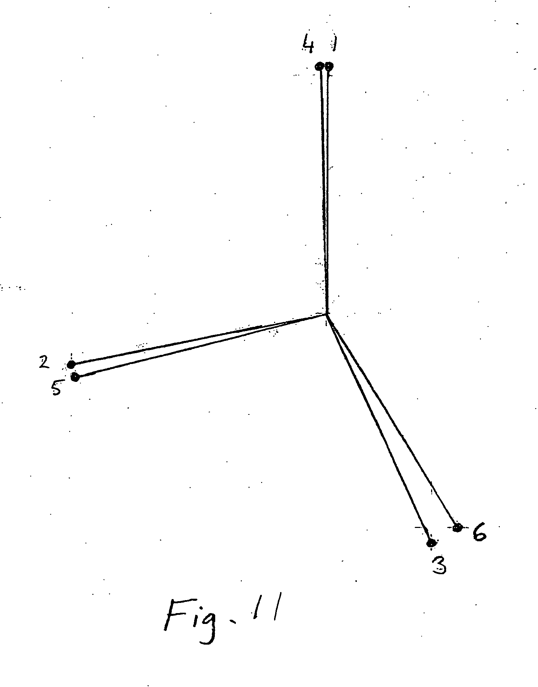

In fig. 7 it can be seen that at the four stroke mode, two consecutive, equal, and short ignition intervals of 105,4° each are followed by a longer interval of 149,2°, in a cyclic manner. Through air and fuel input means 17 combustion loads at the ignitions are controlled based on the ignition intervals. As a first alternative, a combustion load at each ignition is determined on the basis of the ignition interval following immediately upon the ignition. In the first row of the diagram in fig. 10, the combustion load factors, FA 14, according to the first alternative for the case of the four stroke mode are shown. For this presentation the lowest combustion load factor is set to 1 in fig. 11. Where an ignition is followed by 105,4° of crankshaft rotation until the subsequent ignition, FA14 is 1. Where an ignition is followed by the longer interval of 149,2°, FA14 is set proportional to the ratio between the interval following the ignition and the shortest interval of the operation mode, i.e. 149,2°/105,4° = 1,41.

Again, it should be noted that the load factors in fig. 10 are mathematical values not taking into consideration calibration adjustments, that could be required in a practical utilization of the invention.

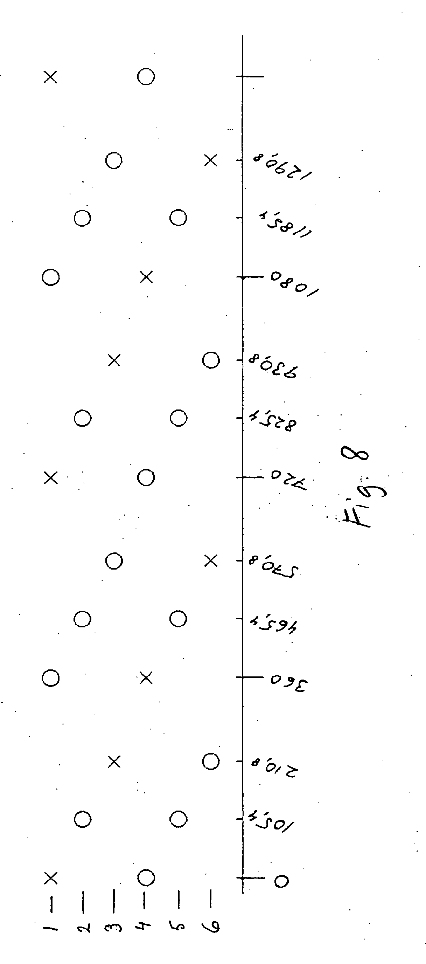

In fig. 8 it can be seen that six ignitions take place in 1080°CA (crankshaft angles). Thus, this operational mode can be referred to as a six stroke mode, since the six cylinders on average complete one cycle in 1080°CA, although no ignitions take place in cylinders 2 and 5. In this six stroke mode a cyclic alteration of an interval of 149,2° and an interval of 210,8° takes place. In the second row of the diagram in fig. 10, the combustion load factors, FA16, according to the first alternative for the case of the six stroke mode are shown. At each ignition, FA16 is set proportional to the ratio between the interval following the ignition and the shortest interval of the four stroke operation mode, i.e. 149,2°/105,4° = 1,41 and 210,8°/105,4° = 2, respectively. In this example, due to the arrangement of the crankshaft, in four and six stroke mode the same ratio, $\sqrt{2}$, between the longer and the shorter interval of each mode is obtained, which means that the engine has "equally unequal" ignition intervals in both of these modes.

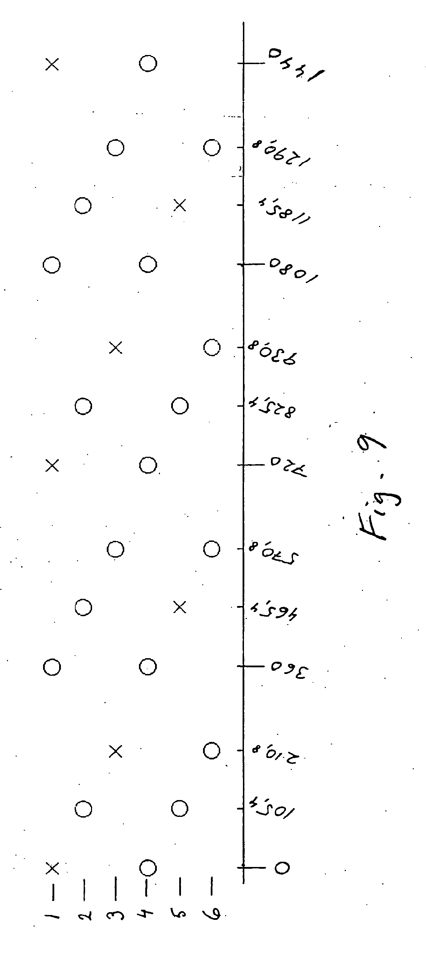

In fig. 9 it can be seen that six ignitions take place in 1440°CA (crankshaft angles). Thus, this operational mode can be referred to as a eight stroke mode, since the six cylinders on average complete one cycle in 1440°CA, although no ignitions take place in cylinders 2, 4 and 6. In this eight stroke mode a cyclic alteration of two long intervals of 254,6° and a shorter interval of 210,8° takes place. In the third row of the diagram in fig. 10, the combustion load factors, FA 18, according to the first alternative for the case of the eight stroke mode are shown. At each ignition, FA 18 is set proportional to the ratio between the interval following the ignition and the shortest interval of the four stroke operation mode, i.e. 254,6°/105,4° = 2,42 and 210,8°/105,4° = 2, respectively.

According to a second alternative, the combustion load at each ignition is determined based on the ignition interval immediately preceding the ignition. The fourth, fifth and sixth row in the diagram in fig. 10 show combustion load factors, FA24, FA26 and FA28, respectively, set according to the second alternative for a four, six and eight stroke mode, respectively.

According to a third alternative, the combustion load at each ignition is determined based on the ignition interval immediately preceding the ignition, and the ignition interval immediately following the ignition. The seventh, eighth and ninth row in the diagram in fig. 10 show combustion load factors, FA34, FA36 and FA38, respectively, set according to the third alternative for a four, six and eight stroke mode, respectively.

In the four stroke mode, where an ignition is preceded by the shorter interval of 105,4° and followed by the longer interval of 149,2°, or vice versa, the combustion load factor is the mean value of said intervals, in turn divided by the shortest interval, i.e. (105,4 + 149,2) /2 = 127,3; 127,3/105,4 = 1,21. In this example, in the six stroke mode, with the two altering intervals, each of the combustion load factors are the mean value of said intervals, in turn divided by the shortest interval of the four stroke mode, i.e. (210,8 + 149,2)/2 = 180; 180/105,4 = 1,71. In the eight stroke mode, where an ignition is preceded by the shorter interval of 210,8° and followed by the longer interval of 254,6°, or vice versa, the combustion load factor is the mean value of said intervals, in turn divided by the shortest interval of the four stroke mode, i.e. (210,8 + 254,6)/2 = 232,7; 232,7/105,4 = 2,21.

An advantage with the third alternative is that each combustion load is determined based on events both before and after the ignition, which makes the determination more accurate, and provides for a smoother operation of the engine.

As a further alternative, the determination of a combustion load is based both on the preceding ignition interval and the subsequent, but these intervals are weighted differently in the determination, so that the combustion load is not equally dependent upon them.

As yet another alternative, the determination of a combustion load is based both on engine ignition intervals in a time region around the time of the ignition related to the combustion load, which time region is larger than that covered by the two intervals being closest to the ignition.

The examples presented with reference to figures 6-10 show that an engine with an even number of cylinders can be adapted to be operated in four, six as well as eight stroke, presenting unequal ignition intervals in each mode. This can be seen as a compromise to achieve acceptable performance in all modes. The analysis of the positions of the crankshaft journals and the ignition intervals in different modes can be refined to find a solution that provides the optimal solution after making certain assumptions concerning the predicted operating conditions of the engine.

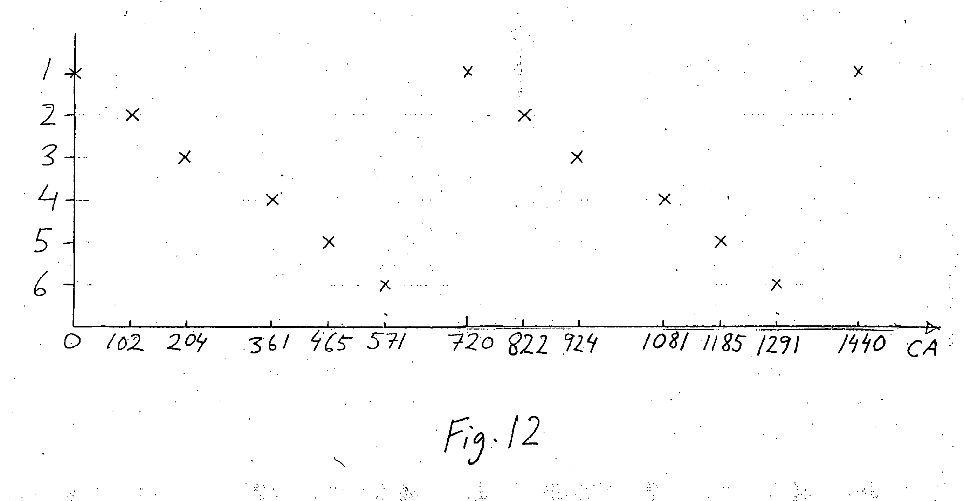

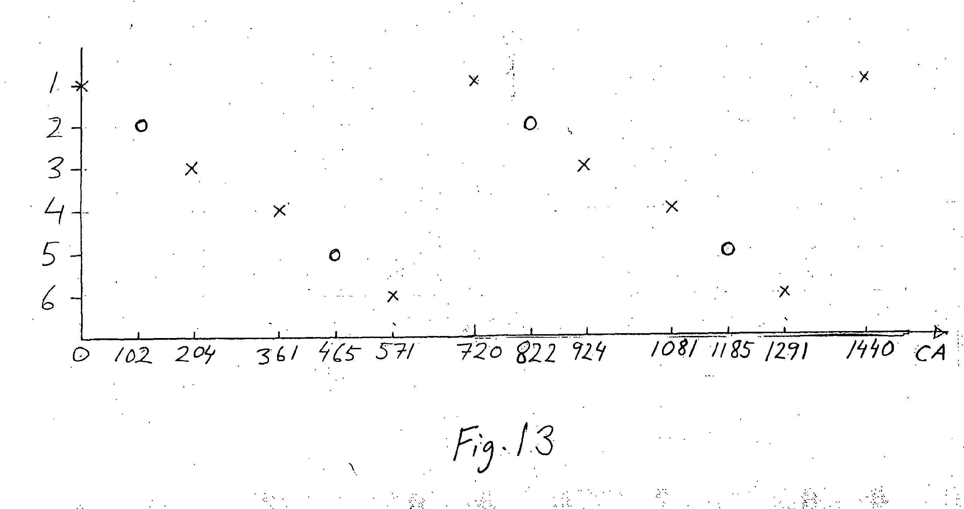

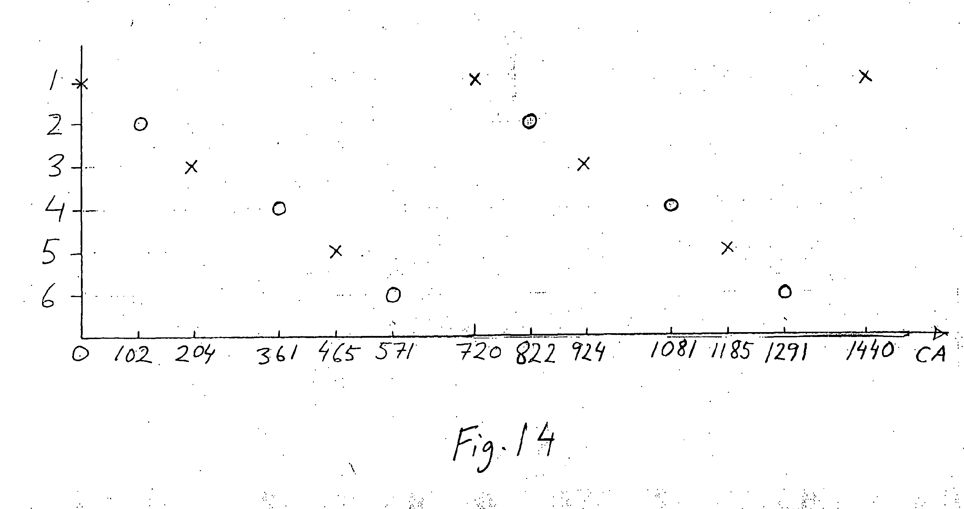

Fig. 11 shows a diagram depicting the angular positions of the crankshaft journals in an inline six cylinder engine, which positions have been determined according to a procedure, where deviations from optimal equal engine ignition intervals in each of a four, six and eight stroke mode are considered, as well as weighting factors for these modes. Figures 12-14 show diagrams depicting four, six and eight stroke modes, respectively, of the engine.

The procedure includes deciding weighting factors for different stroke modes. The engine is determined to be operated in certain stroke modes, and a weighting factor can be set for each stroke mode to reflect, based on assumptions concerning the utilization of the engine, the importance of the stroke mode in relation to other stroke modes of the engine. For example, it can be decided that the engine will operate in four, six or eight stroke mode, depending or current operating conditions. Based on the relative importance of the stroke modes, weighting factors are determined for each stroke mode. In this example the weighting factor for the four stroke mode is set to 55%, for the six stroke mode is set to 40% and for the eight stroke mode 5%.

The procedure includes an iterative process and starts with arbitrarily setting crankshaft journal positions, and determining the ignition to crankshaft angle relationship in each stroke mode. Then, for each mode, and for each ignition in the mode cycle, the difference between the crankshaft angle of that ignition in a non-optimal and an optimal operation is determined. For example, in fig. 12, depicting the four stroke mode of the engine, the ignition occurring at 102°CA would, in an optimal four stroke operation, have occurred at 720°/6 = 120°. The difference is 102° - 120° = -18°. The square value of each difference and the sum of the square values are calculated for each stroke mode. For each stroke mode the sum is multiplied with the weighting factor and the weighted sums of the stroke modes are added to form a sum of weighted errors. In the iterative process the crankshaft journal positions are adjusted until the sum of weighted errors has reached a minimal value.

Referring to fig. 12, 13 and 14, the maximum difference between the crankshaft angles of the ignitions and optimal crankshaft angles of the ignitions is 38° for the four stroke mode, 31° for the six stroke mode and 36° for the eight stroke mode.

An advantage with the procedure described above is that it produces an engine in which ignition intervals in more than one stroke mode have relatively similar sizes, which in combination with the control of combustion loads as described above will result in a good operation of the engine with an essentially continuous output torque more than one stroke mode. Another advantage with the procedure described above is that the inclusion of weighting factors for different stroke modes gives more control in adapting the engine to given operational specifications.

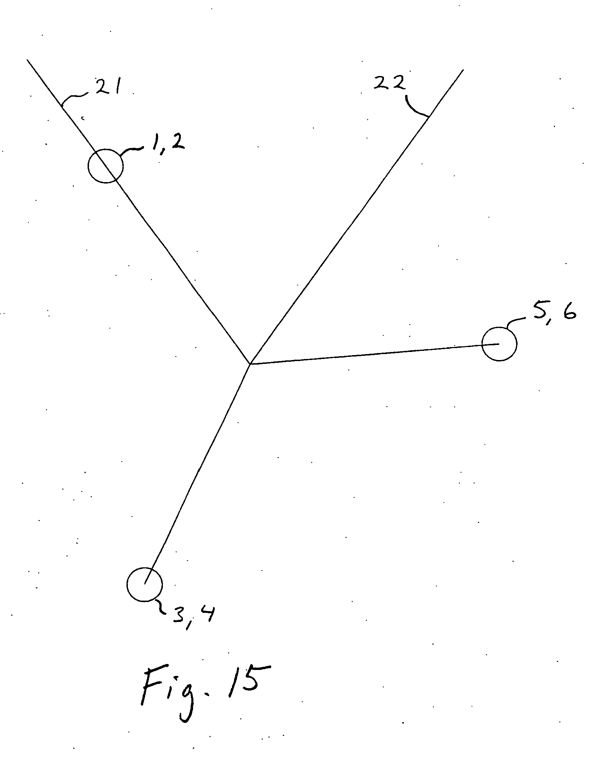

Fig. 15 shows a diagram depicting the angular positions of the crankshaft journals for cylinders 1-6 in a V-type six cylinder engine. The angular positions of the cylinder rows are indicated with the lines 21 and 22. Since the journals for six cylinders are distributed over three angular positions, to achieve a four stroke mode with equal engine ignition intervals, the cylinder rows have to be separated by 120°. However, in most applications this in unpractical, and a smaller distance between the rows are used. In fig. 15 there is 70° between the cylinder rows.

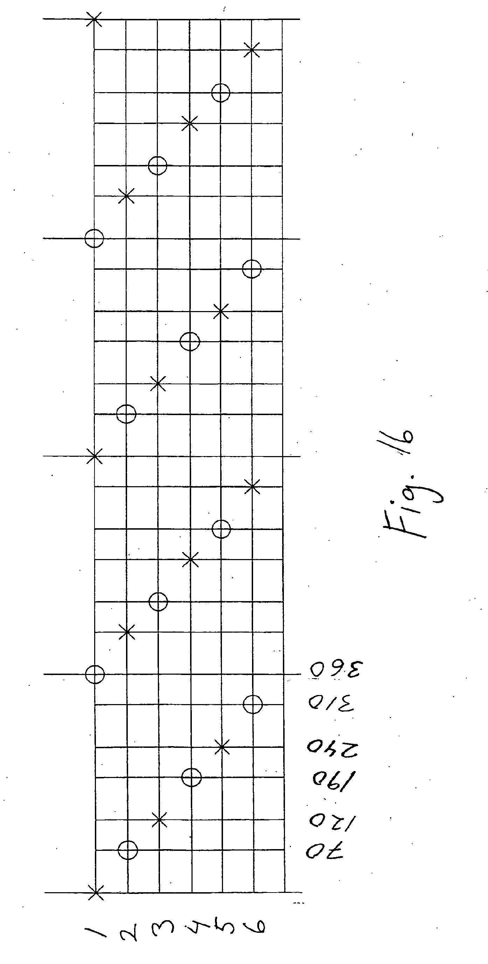

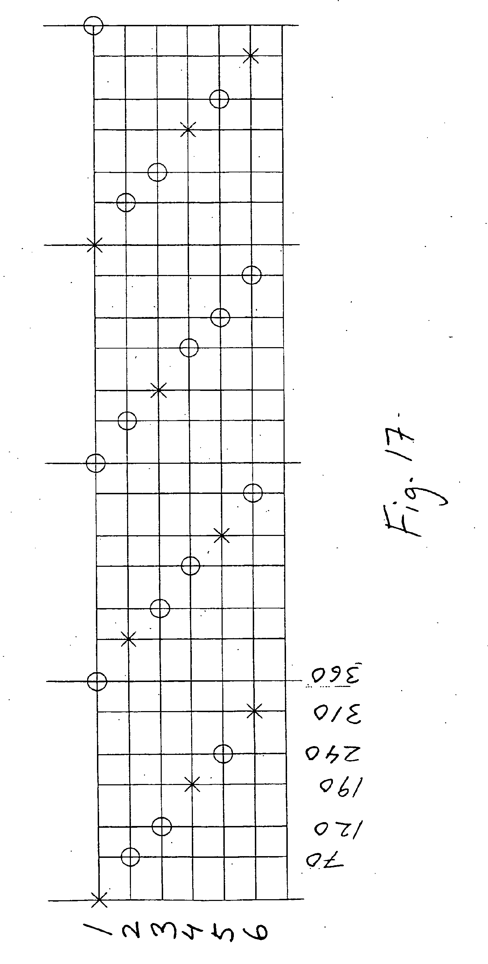

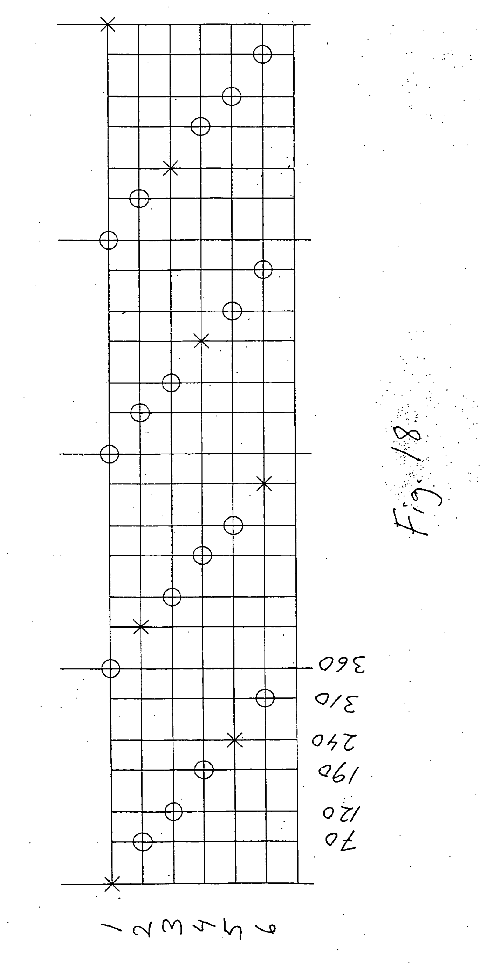

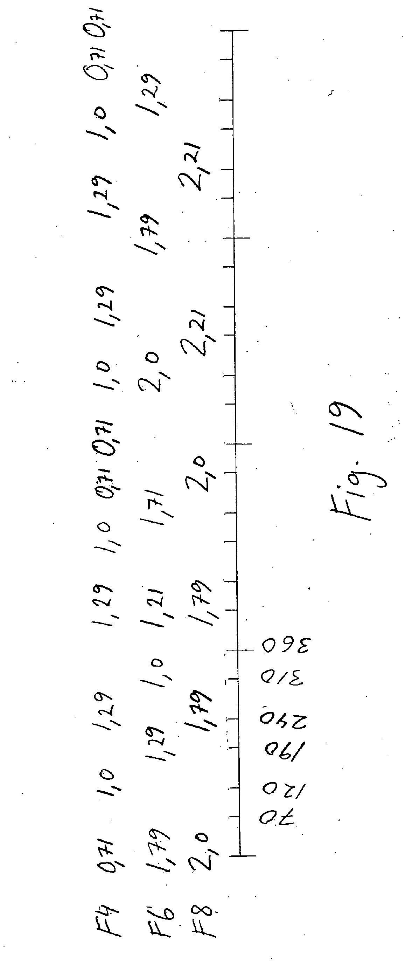

The ignition to crankshaft angle relation for a four, six and eight stroke mode of the V-engine can be seen in fig. 16, 17 and 18, respectively. For each ignition a combustion load is determined based on the ignition interval preceding the ignition and the interval following the ignition. Thereby, a mean value of these intervals is determined, and a combustion load factor is determined by dividing the mean value with a reference value, in this example the optimal engine ignition interval for a four stroke mode, 120°. The result of this is shown in fig. 19, where combustion load factors, $F_4$, $F_6$ and $F_8$, are indicated for the four, six and eight stroke mode, respectively.

Above six cylinder engines have been described, but the invention is equally applicable en any engine with an even number of cylinders, e.g. four, eight, ten or twelve cylinder engines.

**Claims**

1. A method for controlling an internal combustion engine having an even number of cylinders and is operated in different stroke modes, comprising inlet and exhaust valves (14, 15), each of them individually driven, the method comprising adjusting a combustion load at a first ignition at least partly on the basis of at least one interval between two consecutives ignitions of the engine, wherein the step of adjusting a combustion load comprises adjusting the combustion load at the first ignition at least partly on the basis of

   - the angular distance of the crankshaft rotation between the first ignition and an immediately preceding ignition of the engine, and
   - the angular distance of the crankshaft rotation between the first ignition and an immediately subsequent ignition of the engine.

2. A method according to claim 2, wherein the step of adjusting a combustion load comprises adjusting the combustion load at the first ignition at least partly on the basis of the mean value of the angular distance of the crankshaft rotation between the first ignition and the immediately preceding ignition of the engine, and the angular distance of the crankshaft rotation between the first ignition and the immediately subsequent ignition of the engine.

3. A method according to claim 1 or 2, whereby the angular distance of the crankshaft rotation between the first ignition and the immediately preceding ignition of the engine, and the angular distance of the crankshaft rotation between the first ignition and the immediately subsequent ignition of the engine correspond to angular distances between two consecutive ignitions of the engine at two different stroke modes of the engine, each stroke mode presenting essentially equal distances of the crankshaft rotation between consecutive ignitions of the engine.

4. A method according to claim 3, whereby the engine has an even number of cylinders and the two stroke modes are four and eight stroke modes.

5. A method according to claim 1 or 2, whereby the angular distances of the crankshaft rotation between consecutive ignitions of the engine in a time region around the first ignition are unequal and are based on positions of crankshaft journals of a crankshaft of the engine.

6. A method according to claim 5, comprising providing a crankshaft on which the positions of the crankshaft journals are adapted so as for the engine ignition intervals of the engine to present minimal deviations from equal engine ignition intervals in at least two different stroke modes of the engine.

7. A method according to claim 5 or 6, wherein the engine presents cylinders in two rows arranged in a V-configuration, the positions of the crankshaft journals being adapted to the angular distance between the two rows of cylinders.

8. An internal combustion engine system comprising an internal combustion engine and a control device (16), the engine comprising an even number of cylinders, inlet and exhaust valves, each of them individually driven, the engine is operated in different stroke modes, and fuel input means (17) for each cylinder, and a crankshaft including a number of crankshaft journals, the air and fuel input means (17) being adapted to receive for their activation control signals from the control device (16), **characterized in that** the control device (16) is adapted to send at least one control signal so as to control a combustion load at a first ignition, the combustion load being determined at least partly on the basis of at least one interval between two consecutive ignitions of the engine; and whereby the combustion load is determined at least partly on the basis of the angular distance of the crankshaft rotation between the first ignition and the immediately preceding ignition of the engine, and the angular distance of the crankshaft rotation between the first ignition and an immediately subsequent ignition of the engine.

9. An internal combustion engine system according to claim 8, whereby the positions of the crankshaft journals are adapted so as for the engine ignition intervals of the engine to present minimal deviations from equal engine ignition intervals in at least two different stroke modes of the engine.

10. An internal combustion engine system according to any of the claims 8-9, whereby the cylinders are arranged in two rows in a V-configuration, the positions of the crankshaft journals being adapted to the angular distance between the two rows of cylinders.

11. An internal combustion engine system according to any of the claims 8-10, whereby the number of cylinders is even.

**Patentansprüche**

1. Ein Verfahren zur Steuerung eines Verbrennungsmotors, der eine gerade Anzahl von Zylindern aufweist und in verschiedenen Hubmodi bedient wird und Einlass- und Auslassventile (14, 15) umfasst, wobei jedes der Ventile einzeln angetrieben wird; das Verfahren umfasst eine Justierung einer Zündungslast bei einer ersten Zündung zumindest teilweise basierend auf zumindest einem Intervall zwischen zwei aufeinanderfolgenden Zündungen des Motors, wobei der Schritt zur Justierung einer Zündungslast die Justierung der Zündungslast bei der ersten Zündung zumindest teilweise basierend auf

   - dem Winkelabstand der Kurbelwellenrotation zwischen der ersten Zündung und einer unmittelbar vorhergehenden Zündung des Motors und
   - dem Winkelabstand der Kurbelwellenrotation zwischen der ersten Zündung und einer unmittelbar nachfolgenden Zündung des Motors, umfasst.

2. Ein Verfahren gemäß Anspruch 1, wobei der Schritt zur Justierung einer Zündungslast die Justierung der Zündungslast bei der ersten Zündung zumindest teilweise basierend auf dem Mittelwert des Winkelabstands der Kurbelwellenrotation zwischen der ersten Zündung und der unmittelbar vorhergehenden Zündung des Motors und dem Winkelabstand der Kurbelwellenrotation zwischen der ersten Zündung und der unmittelbar nachfolgenden Zündung des Motors, umfasst.

3. Ein Verfahren gemäß Anspruch 1 oder 2, wobei der Winkelabstand der Kurbelwellenrotation zwischen der ersten Zündung und der unmittelbar vorhergehenden Zündung des Motors und der Winkelabstand der Kurbelwellenrotation zwischen der ersten Zündung und der unmittelbar nachfolgenden Zündung des Motors dem Winkelabstand zwischen zwei aufeinanderfolgenden Zündungen des Motors in zwei unterschiedlichen Hubmodi des Motors entspricht, jeder Hubmodus stellt dabei gleiche Abstände der Kurbelwellenrotation zwischen aufeinanderfolgenden Zündungen des Motors vor.

4. Ein Verfahren gemäß Anspruch 3, wobei der Motor eine gerade Anzahl Zylinder aufweist und die zwei Hubmodi ein vier und ein acht Hubmodus sind.

5. Ein Verfahren gemäß Anspruch 1 oder 2, wobei die Winkelabstände der Kurbelwellenrotation zwischen zwei aufeinanderfolgenden Zündungen des Motors in einem Zeitraum um die erste Zündung ungleich sind und auf Positionen des Kurbelwellenzapfens einer Kurbelwelle des Motors basieren.

6. Ein Verfahren gemäß Anspruch 5, das die Bereitstellung einer Kurbelwelle umfasst, an welcher die Positionen des Kurbelwellenzapfens angepasst sind, sodass das Motorzündungsintervall des Motors minimal Abweichung vom gleichen Motorzündungsintervall in zumindest zwei unterschiedlichen Hubmodi des Motors aufweist.

7. Ein Verfahren gemäß Anspruch 5 oder 6, wobei der Motor in zwei Reihen in einer V-Anordnung angeordnete Zylinder aufweist und die Positionen des Kurbelwellenzapfens an den Winkelabstand zwischen den zwei Reihen von Zylindern angepasst sind.

8. Ein Verbrennungsmotorsystem, umfassend einen Verbrennungsmotor und ein Steuergerät (16); der Motor umfasst eine gerade Anzahl von Zylindern, sowie Einlass- und Auslassventile, jedes der Ventile wird einzeln angetrieben, der Motor wird in unterschiedlichen Hubmodi bedient, Luft- und Treibstoffzufuhrmittel (17) für jeden Zylinder, und eine Kurbelwelle einschließlich einer Anzahl von Kurbelwellenzapfen, die Luft- und Treibstoffzufuhrmittel (17) sind zum Empfang ihres Aktivierungssteuersignals durch das Steuergerät (16) angepasst, **dadurch gekennzeichnet, dass** das Steuergerät (16) zum Abschikken zumindest eines Steuersignals zur Steuerung einer Zündungslast einer ersten Zündung eingestellt wird, die Zündungslast basiert dabei zumindest teilweise auf zumindest einem Intervall zwischen zwei aufeinanderfolgenden Zündungen des Motors; und wonach die Zündungslast zumindest teilweise durch den Winkelabstand der Kurbelwellenrotation zwischen der ersten Zündung und der unmittelbar vorhergehenden Zündung des Motors, und den Winkelabstand der Kurbelwellenrotation zwischen der ersten Zündung und einer unmittelbar nachfolgenden Zündung des Motors bestimmt wird.

9. Ein Verbrennungsmotorsystem gemäß Anspruch 8, wobei die Positionen der Kurbelwellenzapfen angepasst sind, sodass das Motorzündungsintervall des Motors minimale Abweichungen vom gleichen Motorzündungsintervall in zumindest zwei unterschiedlichen Hubmodi des Motors aufweist.

10. Ein Verbrennungsmotorsystem gemäß eines der Ansprüche 8-9, wobei die Zylinder in zwei Reihen in einer V-Anordnung angeordnet sind und die Positionen der Kurbelwellenzapfen an dem Winkelabstand zwischen den zwei Reihen von Zylindern angepasst sind.

11. Ein Verbrennungsmotorsystem gemäß eines der Ansprüche 8-10, wobei die Anzahl der Zylinder gerade ist.

## Revendications

1. Procédé de commande d'un moteur à combustion interne ayant un nombre pair de cylindres et qui fonctionne selon différents modes de course de piston, comprenant des soupapes d'entrée et d'échappement (14, 15), chacune d'elles étant entraînée de manière individuelle, le procédé comprenant l'ajustement d'une charge de combustion à un premier allumage au moins partiellement sur la base d'au moins un intervalle entre deux allumages consécutifs du moteur, où l'étape d'ajustement d'une charge de combustion comprend l'ajustement de la charge de combustion au premier allumage au moins partiellement sur la base de
la distance angulaire de la rotation du vilebrequin entre le premier allumage et un allumage immédiatement précédent du moteur, et
la distance angulaire de la rotation du vilebrequin entre le premier allumage et un allumage immédiatement ultérieur du moteur.

2. Procédé selon la revendication 2, dans lequel l'étape d'ajustement d'une charge de combustion comprend l'ajustement de la charge de combustion au premier allumage au moins partiellement sur la base de la valeur moyenne de la distance angulaire de la rotation du vilebrequin entre le premier allumage et l'allumage immédiatement précédent du moteur, et la distance angulaire de la rotation du vilebrequin entre le premier allumage et l'allumage immédiatement ultérieur du moteur.

3. Procédé selon la revendication 1 ou 2, dans lequel la distance angulaire de la rotation du vilebrequin entre le premier allumage et l'allumage immédiatement précédent du moteur, et la distance angulaire de la rotation du vilebrequin entre le premier allumage et l'allumage immédiatement ultérieur du moteur correspond aux distances angulaires entre deux allumages consécutifs du moteur selon deux modes de course du piston différents du moteur, chaque mode de course du piston présentant sensiblement des distances égales de la rotation du vilebrequin entre des allumages consécutifs du moteur.

4. Procédé selon la revendication 3, dans lequel le moteur possède un nombre pair de cylindres et les deux modes de course du piston sont des modes à quatre temps et à huit temps.

5. Procédé selon la revendication 1 ou 2, dans lequel les distances angulaires de la rotation du vilebrequin entre des allumages consécutifs du moteur dans une région de temps autour du premier allumage sont inégales et sont basées sur des positions de tourillons de vilebrequin d'un vilebrequin du moteur.

6. Procédé selon la revendication 5, consistant à fournir un vilebrequin sur lequel les positions des tourillons de vilebrequin sont adaptées de manière que les intervalles d'allumage de moteur du moteur présentent des déviations minimales d'intervalles égaux d'allumage de moteur dans au moins deux modes de course de piston différents du moteur.

7. Procédé selon la revendication 5 ou 6, dans lequel le moteur présente des cylindres en deux rangées agencées en une configuration en V, les positions des tourillons du vilebrequin étant adaptées à la distance angulaire entre deux rangées de cylindres.

8. Système de moteur à combustion interne comprenant un moteur à combustion interne et un dispositif de commande (16), le moteur comprenant un nombre pair de cylindres, des soupapes d'entrée et d'échappement, chacune d'elles étant entraînée de manière individuelle, le moteur fonctionnant selon différents modes de course de piston, et des moyens d'entrée de carburant (17) pour chaque cylindre, et un vilebrequin comprenant un nombre de tourillons de vilebrequin, les moyens d'entrée d'air et de carburant (17) étant adaptés pour recevoir pour leur activation des signaux de commande provenant du dispositif de commande (16), **caractérisé en ce que** le dispositif de commande (16) est adapté pour envoyer au moins un signal de commande de manière à commander une charge de combustion à un premier allumage, la charge de combustion étant déterminée au moins partiellement sur la base d'au moins un intervalle entre deux allumages consécutifs du moteur ; et grâce à quoi la charge de combustion est déterminée au moins partiellement sur la base de la distance angulaire de la rotation du vilebrequin entre le premier allumage et l'allumage immédiatement précédent du moteur, et la distance angulaire de la rotation du vilebrequin entre le premier allumage et un allumage immédiatement ultérieur du moteur.

**9.** Système de moteur à combustion interne selon la revendication 8, dans lequel les positions des tourillons de vilebrequin sont adaptées de manière que les intervalles d'allumage de moteur du moteur présentent des déviations minimales par rapport à des intervalles égaux d'allumage de moteur dans au moins deux modes de course de piston différents du moteur.

**10.** Système de moteur à combustion interne selon l'une quelconque des revendications 8 à 9, dans lequel les cylindres sont agencés en deux rangées dans une configuration en V, les positions des tourillons de vilebrequin étant adaptées à la distance angulaire entre les deux rangées de cylindres.

**11.** Système de moteur à combustion interne selon l'une quelconque des revendications 8 à 10, dans lequel le nombre de cylindres est pair.

Fig. 1

Fig. 2

Fig. 3

Fig. 4

Alt-4-8

4
8
F

0 360 720 1080 1440 1800 2160 2520 2880 3240 3600 3960 4320

Fig. 5

1, 4

2, 5

3, 6

Fig. 6

Fig. 7

Fig. 8

Fig. 9

| | 0 | 105,4 | 210,8 | 360 | 465,4 | 570,8 | 720 | 825,4 | 930,8 | 1080 | 1185,4 | 1290,8 |
|---|---|---|---|---|---|---|---|---|---|---|---|---|
| FA14 | 1 | 1 | 1,41 | 1 | 1 | 1,41 | 1 | 1 | 1,41 | 1 | 1 | 1,41 |
| FA16 | 2 | | 1,41 | 2 | | 1,41 | 2 | | 1,41 | 2 | | 1,41 |
| FA18 | 2 | | 2,42 | | 2,42 | | 2 | | 2,42 | | 2,42 | |
| FA24 | 1,41 | 1 | 1 | 1,41 | 1 | 1 | 1,41 | 1 | 1 | 1,41 | 1 | 1 |
| FA26 | 1,41 | | 2 | 1,41 | | 2 | 1,41 | | 2 | 1,41 | | 2 |
| FA28 | 2,42 | | 2 | | 2,42 | | 2,42 | | 2 | | 2,42 | |
| FA34 | 1,21 | 1 | 1,21 | 1,21 | 1 | 1,21 | 1,21 | 1 | 1,21 | 1,21 | 1 | 1,21 |
| FA36 | 1,71 | | 1,71 | 1,71 | | 1,71 | 1,71 | | 1,71 | 1,71 | | 1,71 |
| FA38 | 2,21 | | 2,21 | | 2,42 | | 2,21 | | 2,21 | | 2,42 | |

Fig. 10

EP 1 418 323 B1

Fig. 11

Fig. 12

Fig. 13

Fig. 14

EP 1 418 323 B1

Fig. 15

Fig. 16

Fig. 17.

Fig. 18

Fig. 19

**EP 1 418 323 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1136678 A